Europäisches Patentamt

European Patent Office

Office européen des brevets

(11) Publication number: **0 098 889**
**B1**

## (12) EUROPEAN PATENT SPECIFICATION

(45) Date of publication of patent specification: **03.09.86**

(21) Application number: **82106154.6**

(22) Date of filing: **09.07.82**

(51) Int. Cl.⁴: **C 09 C 1/48**

(54) **Process to produce carbon black particles and carbon black separating apparatus.**

(43) Date of publication of application:
**25.01.84 Bulletin 84/04**

(45) Publication of the grant of the patent:
**03.09.86 Bulletin 86/36**

(84) Designated Contracting States:
**AT BE CH DE FR GB IT LI LU NL SE**

(56) References cited:
**US-A-3 380 719**

(73) Proprietor: **PHILLIPS PETROLEUM COMPANY**
**5th and Keeler**
**Bartlesville Oklahoma 74004 (US)**

(72) Inventor: **Cheng, Paul Jih-tien**
**2901 S.E. Greenwood Court**
**Bartlesville Oklahoma 74003 (US)**

(74) Representative: **Altenburg, Udo, Dipl.-Phys.**
**et al**
**Patent- und Rechtsanwälte Bardehle-**
**Pagenberg-Dost-Altenburg & Partner Postfach**
**86 06 20**
**D-8000 München 86 (DE)**

## Description

This invention relates to a process to produce carbon black and to an apparatus for separating carbon black as defined in the opening clause of the independent claims 1 and 14 respectively.

Background of the invention
A variety of procedures and apparatuses have been described in the art for separating aerosols. The individual techniques vary substantially depending upon the nature of the aerosol. Filtration, electroseparation, and cyclone separation are just a few of these techniques. In many of the aerosol separating techniques, and particularly in filtration procedures, the problem arises that the separator becomes less and less effective during the separation phase. This can for instance occur due to the plugging of the filter material with the solids to be removed from the aerosol as well as by the growth of a filter cake of increasing thickness.

Particularly, in the production of carbon black the carbon black containing smoke is passed through filter bags. The filtration capacity for a given bag filter is a function of the particulates' concentration and the nature of the smoke. Specifically, the agglomerate size is a feature that has influence on the filtration capacity of a bag filter.

One solution that has been proposed to increase the separator efficiency employs a fluidized bed of carbon black pellets through which the carbon black containing smoke is passed. Such a unit is described in U.S. Patent 2,864,674. Whereas this system is believed to constitute a significant contribution to the art it requires a separate carbon black pellet circulating system. Furthermore, the process is carried out under wet conditions thus requiring the materials confining the fluidized bed of carbon black pellets as well as related equipment to be produced from specific corrosion resistant material.

The invention
It is thus one object of this invention to provide a process for separating carbon-black containing aerosols in which the efficiency of an aerosol separator is increased by utilizing simple and relatively inexpensive means. Such carbon black-containing aerosols are hereinafter named aerosols.

Another object of this invention is to provide an aerosol separating process wherein during an auto-preseparation the physical nature of the aerosol is changed in order to increase separation efficiency of the downstream separator.

A further object of this invention is to provide a process for removing carbon black particles from a carbon black containing smoke, particularly under non-corrosive operative conditions.

Still another object of this invention is to provide an apparatus for carrying out this separation process.

These and other objects, details, features, advantages and embodiments of this invention will become apparent to those skilled in the art from the following detailed description of the invention, the appended claims and the drawing in which

Fig. 1 is a schematic view of a carbon black production unit containing the inventive auto-preseparation feature.

Figs. 2 and 3 are schematical front and respectively side views of a portion of a carbon black filter house.

Figs. 4 and 5 schematically show respectively a sideview and an endview of a portion of a carbon black filter house containing a further embodiment of the invention.

According to the invention a process is provided as defined in the characterising part of claim 1. Preferred embodiments are set forth in the dependent claims 2 to 14.

In accordance with this invention it has been found that an aerosol separation process wherein an aerosol is passed through a separator to separate loose particles from the aerosol can be substantially improved by passing the aerosol first through a mass of accumulated loose particles removed from this separator and thereafter through the separator. By this procedure the aerosol is pretreated in a step that can be called auto-preseparation because the aerosol is contacted with the solid material which has just been removed from the separator. The so-modified aerosol which leaves the accumulated loose solids through which it has been passed differs from the original aerosol either in the fact that the total solids load is less than, i.e. the density of the modified aerosol is less than that of the original aerosol (less particles in a volume of gas) or that the average particle size in the modified aerosol is larger than that of the original aerosol, or in that both of these features occur simultaneously.

The mass of accumulated, loose particles is characterized by the fact that the separated solid particles have settled by gravity to form this mass. The particles from the separator prior to their forming said mass have not been subject to any treatment changing their physical properties (e.g. particle size, adhesion, cohesion) and are essentially in a non-turbulent state in this mass.

In accordance with a first embodiment of this invention a process to produce carbon black is provided which comprises passing the carbon black-containing aerosol consisting of loose particles and gas through a loose mass of flocculent, dry carbon black which has been withdrawn from a separator and accumulated as said mass. Thereby a modified aerosol is produced which consists of loose particles and the gas, but having a composition differing from the aerosol passed into said mass. Either the density of the modified aerosol is less than the density of the original aerosol and/or the average size of the loose particles of the aerosol is larger than for the original aerosol. The so-modified aerosol is then passed through the separator to produce a gas depleted of carbon black. These loose carbon black particles then are removed from the separator. The total mass of loose flocculent dry carbon black used for the auto-preseparation is kept approximately constant by adding and/or withdrawing carbon black particles from this mass. This adding or withdrawing of loose carbon black particles from the mass can be done continuously or in intervals. Usually, ths mass is continuously removed from the operation, as by an auger or pneumatic conveying, at a rate about equal to the accumulation of the mass, as from the separator and from particles removed from the aerosol during contact with the mass, in order to maintain a desired depth of the mass accumulated in the collection chamber.

In the preferred operation the modified aerosol has both a reduced density (reduced kg of solids per m³ of gas) and an increased average particle size as compared to the original aerosol. Essentially all of the loose carbon black particles separated from the modified aerosol in the separator can be added to this loose mass and an amount of loose carbon black particles equivalent to the quantity of particles from the separator plus the difference between the particle content of the original aerosol and that of the modified aerosol is withdrawn from the loose mass. Preferably, the addition of the carbon black particles to the loose mass from the separator and the withdrawal from the loose mass occurs at opposite ends of the loose mass. Usually the loose carbon black particles from the separator are added to the mass from the top and particles withdrawn are removed from the bottom of the loose mass.

Whereas a wide variety of separators can be used in connection with this invention, it is presently preferred to utilize a bag filtration unit. The aerosol is passed through the filter and the material collected on the filter is removed. This removal of filter material is generally done periodically by such operations as backflowing the filter, i.e. passing a backflow gas in opposite direction to flow of the aerosol through the filter, pulse jets, or shaking the filter.

The construction of the unit to be used becomes particularly simple when the separator is arranged above a collecting chamber so that the loose particles can simply fall from the separator into the collecting chamber through which the aerosol then passes prior to reaching the separator.

In the process a smoke containing first carbon black particles is produced by decomposition or respectively incomplete combustion of a carbon black feedstock. A mass of loose, flocculent carbon black is provided and at least a portion of the smoke is passed into said mass. From this mass a modified aerosol stream comprising the gas phase of the smoke and second carbon black particles from the mass is withdrawn. The modified aerosol is introduced into a separator to produce a carbon black product composed essentially of the second carbon black particles and a gas substantially depleted or essentially free of carbon black.

The mass of loose, flocculent carbon black is preferably provided in at least one collecting chamber in which the dry, loose, flocculent carbon black from the separator is collected. The collection of the carbon black in the collecting chamber becomes particularly simple when the separator is arranged above the collecting chamber so that the carbon black particles can simply fall from the separator into the collecting chamber. The collecting chamber in which the auto-preseparation of the carbon black containing smoke by contacting this smoke with accumulated but loose flocculent dry carbon black has essentially two functions. The chamber acts as a filtration and separation unit wherein the carbon black containing smoke is contacted with "its own" loose carbon black particles. Thereby the carbon black content of the smoke can be reduced. Furthermore the carbon black particles actually leaving the mass and entering the separation system, e.g. the filter bag, has a substantially larger average particle size than that of the original smoke. Finally the chamber has the function of a settling zone in which larger carbon black particles settle and from which ultimately the carbon black particles are withdrawn.

The operating conditions for the auto-preseparation in this carbon black production process are not particularly critical. It is, however, presently preferred to carry out the entire separation at a temperature of 204°C (400°F) or higher to avoid any moisture condensation in the filter house. The upper limit for the preferred temperature range is given also by practical considerations. The temperature should not be as so high as to cause any damage to the separation equipment. For this reason the carbon black containing smoke coming from the furnace is first quenched and usually cooled before the separation steps. The temperature in the separation steps is preferably below about 260°C (500°F).

An important feature of this invention resides in the fact that the carbon black that is accumulated from the separator is loose, dry, flocculent carbon black. Generally, the density of this accumulated, loose, dry, flocculent carbon black is less than 80 g/dm³ (five lbs/ft³) e.g. 8 to 80 g/dm³ and usually within the range of about 32 to 48 g/dm³.

The particle size of carbon black in the smoke entering the auto-preseparation zone is approximately 0.01 to 0.5 microns (0.01 to 0.5 μm) typical small particle black such as N110 has an average particle diameter of 0.02 to 0.03 microns (0.02 to 0.03 μm) whereas large particle blacks such as N990 has an average particle diameter of 0.2 to 0.4 microns (0.2 to 0.4 μm). The loose, dry, flocculent carbon black accumulated from the separator with which the smoke is contacted in the auto-preseparation step has an average particle size in the range of about 10 to 40 microns (10 to 40 μm).

The carbon black containing smoke or aerosol is passed through conduits and released into the accumulated mass of particles so that the aerosol or smoke has to flow through a substantial portion of this mass. It is frequently desirable to release the aerosol or smoke in the lower portion of the accumulated mass and to withdraw the modified aerosol from near the top at the top of the accumulated mass.

In one variation of the carbon black separation embodiment, the carbon black containing smoke is entered into the filter house downwardly, preferably essentially vertically downwardly. The smoke thereby contacts and mixes with accumulated loose carbon black particles in the collecting area below the filter bags. The smoke is injected, in other words, in a direction opposite to where the gas ultimately is supposed to go. The smoke is directed away from the filter bags into the bottom of the collecting chamber and the smoke then reverses its flow direction and after contacting the loose carbon black particles flows into the filter bags. The point of release of the smoke, e.g. the downwardly facing holes in smoke carrying pipes, can be above the accumulated loose, dry, flocculent carbon black. The release velocity or injection velocity of the smoke is such that the smoke travels a substantial distance downwardly before the gas flow is reversed in upward direction and toward the separator (e.g. the filter bags).

A still further embodiment of this invention resides in an apparatus for carrying out the process of this invention. This apparatus comprises a source of a carbon black containing smoke, at least one collecting chamber for collecting carbon black, a conduit connecting the source and the collecting chamber, where the conduit opens into the collecting chamber at a locus where the aerosol contacts a substantial portion of the collected or accumulated loose particles. Separator means are provided for and connected to the collecting chamber and adapted to separate the carbon black from the carbon black containing smoke and thus to generate flocculent loose carbon black and an off-gas. Conduit means are connected to the separator means and the collecting chamber which permit the carbon black to be conveyed from the separator means to the collecting chamber and also permitting the smoke having passed through the accumulated carbon black particles to pass to the separator means. The separator means preferably are filter means. These filter means comprise a large number of filter bags which are arranged vertically with their longitudinal axis. The filter means are preferably arranged above the collecting chamber or chambers. In this case the conduit means mentioned are the walls enclosing the space between the filter means and the collecting chamber. This collecting chamber preferably comprises downwardly converging walls. Conveying means are associated with the lowest section of the collecting chamber and the conduit for introducing the aerosol or carbon black containing smoke is arranged so that the aerosol or smoke will enter the collecting chamber in the vicinity of the lowest section thereof. Depending upon the size of the conduit and the pressure drop it may be advantageous to provide a deflector plate within the collecting chamber to avoid a "blowing through" of the aerosol or smoke. Such deflector plates will cause the smoke to be dispersed and thus will cause a relatively even flow of the smoke throughout the accumulated particles in the collecting chamber.

In a variation of the carbon black apparatus embodiment of this invention a carbon black filter house comprising a plurality of filters and one or more collecting chambers beneath the filters is further improved in accordance with this invention. A conduit (e.g. a pipe) for injecting the carbon black containing smoke into the filter house is provided which has or is connected to one or more openings facing downwardly, i.e. away from the filters. The cross section of these openings is such that a substantial pressure drop occurs across these openings so that the carbon black containing smoke enters the chamber below the filters at a significant speed. Thereby the preagglomeration or auto-preseparation of the carbon black particles in the smoke is enhanced since substantial contact between these particles and the loose carbon black particles is provided. Most preferably in this variation the filter house is subdivided into a plurality of compartments, each compartment containing a large number of filter bags. The carbon black containing smoke is introduced through a smoke header which may be a pipe or a system of pipes. Under each of the compartments a downwardly facing hole in the smoke carrying pipe is provided. This hole, in other words, faces away from the filter bag compartment and into the area where the loose, flocculent, dry carbon black is accumulated below the filter bag compartment.

In summary the invention is based on the fact that the lower the concentration and the larger the particle size introduced into the filter, the higher the capacity of the filter will be. The smoke passes through a layer of loose carbon black which is already collected on the bottom of the filter bag house and from there into the filter bag. This prefiltration and preagglomeration step accomplishes two things simultaneously. First, the loose black layer captures a part of the black particles thus reducing the particulate concentration in the stream. Secondly, while going through the dense phase black layer the particles in the stream further agglomerate to a larger size and thus become easier to separate at the bag filter and have less tendency to plug the pores of the filter material. Both of these features promote the filtration capacity and thus allow a reduction in the filtration costs.

The following description of the drawing and the specific examples are intended to further illustrate the invention and preferred features thereof.

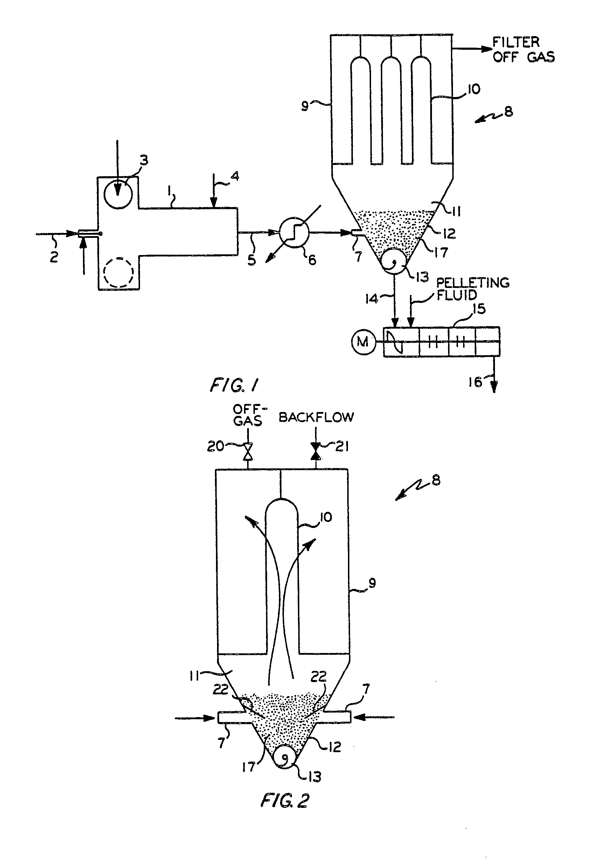

Fig. 1 schematically illustrates a carbon black production system. In a furnace 1 a hydrocarbon feedstock such as an aromatic oil introduced via conduit 2 is converted into a carbon black containing smoke by contacting the oil with hot combustion gases tangentially introduced into the reactor via conduit 3. The carbon black forming reaction is stopped by quenching the smoke e.g. with water or a gas, such as cooled smoke, introduced via conduit 4. The carbon black containing smoke is withdrawn from the reactor via conduit 5, further cooled in heat exchanger 6 and is finally introduced via conduit 7 into the filter system 8. This filter system comprises a housing 9 in which a large number of filter bags 10 are vertically arranged with their open ends facing downwardly. Below the housing 9 a collecting chamber 11 confined by converging walls 12 is arranged in open communication with the housing 9.

At the lower end of the collecting chamber 11 is a carbon black withdrawal means 13 such as an auger or pneumatic conveying means, by way of a star valve. From this lower section of the collecting chamber 11 the carbon black is conveyed via a conduit 14 to a pelleter 15 wherein the loose and flocculent carbon black is pelleted and the final pelleted product is withdrawn via line 16. A surge vessel (not shown) is often used between withdrawal means 13 and the pelleter 15.

In accordance with this invention the carbon containing smoke is introduced into the collecting chamber 11 at an elevation close to the lower end of the collecting chamber 11. Thus the carbon black containing smoke first contacts, during its passage to the filter bags 10, the accumulated loose carbon black mass 17. This results in a auto-preseparation and agglomeration of the particles in the aerosol and thus in an increase of particle size of the carbon black which ultimately reaches the inside of the filter bags 10.

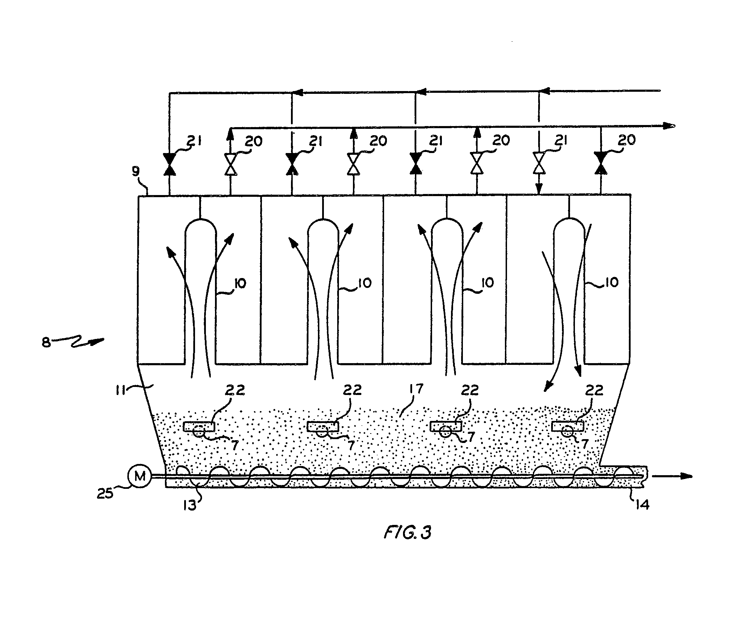

Figs. 2 and 3 show a variation of the separation system 8 in a front and a side view. The filter bags 10 are arranged in chambers 9. The off-gas leaves these chambers via a valve 20 and backflow gas can be introduced into chamber 9 via a valve 21. Thereby the carbon black collected inside of the filter bag is to a substantial extent removed from the bag and falls into the collecting chamber 11.

In this embodiment of Figs. 2 and 3 a plurality of conduits 7 for the introduction of carbon black containing smoke is shown to assure an even distribution of the smoke throughout the loose accumulated carbon black. Each inlet conduit 7 is provided with a deflector plate 22. This deflector plate prevents the smoke from "tunnelling" through the loose black on top of it and causes a better distribution and a more turbulent flow of the smoke through the loose carbon black bed 17.

The auger 13 is driven by a motor 25 and conveys the accumulated carbon black via conduit 14 to further processing, such as pelleting. The quantity of carbon black removed is equal to the quantity of carbon black introduced via conduits 7 (assuming no loss through the filter bags 10).

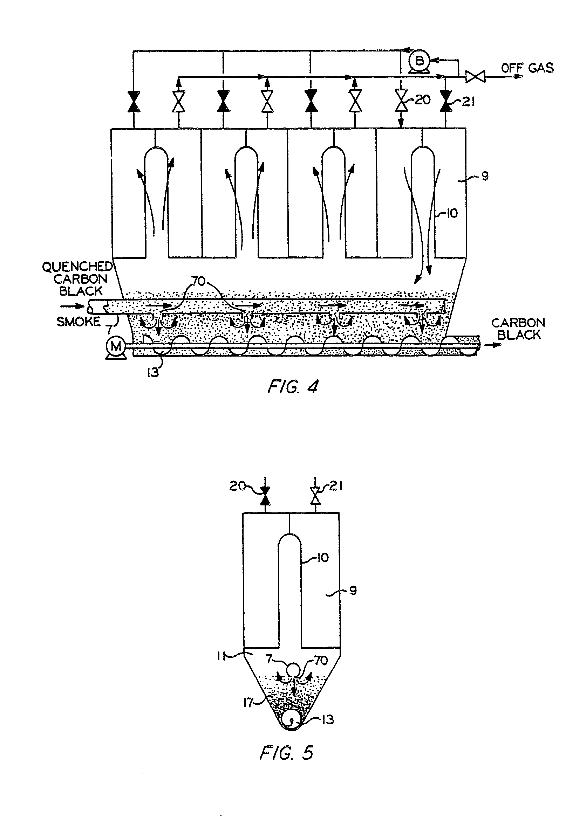

In the embodiment of a carbon black filter house which schematically is shown in a side view in Figure 4 and in an end view in Figure 5, the carbon black containing quenched smoke enters the filter house via a pipe 7. Typically this pipe 7 can have an outside diameter of 24 inches (61 cm). The filter house comprises a plurality of filter compartments or chambers 9. In Figures 4 and 5 only one filter bag 10 is shown for each compartment 9. It is, however, preferred that each of the filter compartments 9 contains a large number of such filter bags 10, e.g. several hundreds. The smoke inlet pipe 7 is provided with several openings 70 which may be circular openings having a diameter of e.g. 7-7/8'' (20 cm). Each filter chamber 9 is associated with one of these openings 70. The openings 70 face downwardly, and preferably vertically downwardly, i.e. away from the filter chamber or compartment 9. The carbon black containing smoke leaves the pipe 7 through the opening 70 at a high speed in downward direction. The gas will eventually reverse its flow and follow the pressure gradient and flow through the filter bags 10. This flow is schematically indicated by the arrows in the drawing.

Without limitation to the scope of this invention it is presently believed that the smoke leaving the openings 70 is subjected to a preagglomeration in which the carbon black particles in the smoke increase in size. It has been found that the actual filter bag load is substantially reduced by the invention. The loose carbon black mass 17 which is accumulated in the lower portion of the collecting chamber 11 is removed with an auger 13 for further processing, e.g. pelleting or packaging.

Example

A commercial carbon black operation has been used to test the invention. In a first run the commercial plant was operated as originally designed. In this run the carbon black containing smoke was introduced into the collecting chamber 11 at a high elevation of about 12 feet above the auger or valve 13 (above the accumulated mass 17). Then in a second run the smoke inlet pipe was moved 8 feet downward toward the valve or auger 13. This caused the carbon black containing smoke to contact the loose, accumulated carbon black 17 in the collecting chamber 11. The pressure drop across the filter back has been measured for both runs both at the beginning (essentially no filter cake built up) and at the end of the filtration (after filter cake has built up). The results are shown in the following table.

TABLE

| | ΔP across bags, inches $H_2O$ (cm $H_2O$) | |
| --- | --- | --- |
| | Start of filtration | End of filtration |
| First Run | 9 (22.9) | 13 (33.0) |
| Second Run (invention) | 2 ( 5.1) | 4 (10.2) |

Since the bag house can be operated at the 13 inches (33.0 cm) of water final ΔP, as in the first run, the rate of smoke charged in the second run (invention run ) can be more than doubled to obtain this same final 13 inches (33 cm) of water ΔP.

The invention allows twice as much carbon black recovery in the same apparatus (except for the locus of smoke introduction) during the same filtration time. Or, for the same rate of smoke charged, for the same amount of carbon black recovery during the same filtration time, for the 13 inches (33 cm) of water ΔP, the invention requires only about one-half the number of bags.

**Claims**

1. A process to produce carbon black comprising

(a) producing a smoke containing first carbon black particles by decomposition or respectively incomplete combustion of a carbon black feedstock,

(b) passing at least a portion of said smoke obtained in step (a) into contact with carbon black particulate material, and

(c) withdrawing an aerosol stream comprising the gas phase of said smoke and carbon black particles and introducing said aerosol into a separator, characterized in that said step (b) is carried out by passing at least a portion of said smoke into a mass of loose, flocculent, dry second carbon black particles obtained from said separator as said particulate material.

2. The process of claim 1 characterized in that said mass is provided in at least one collecting chamber wherein dry, loose flocculent carbon black from the separator is collected.

3. The process of claim 1 or 2 characterized in that said mass of loose, flocculent, dry carbon black is essentially unagglomerated and unpelletized and is held in position essentially by gravity.

4. The process of claim 2 or 3 characterized in that said collecting chamber is arranged below said separator.

5. The process of claim 4 characterized in that said separator is a filter system.

6. The process of any of claims 1 to 5 characterized in that at least a portion of said carbon black product from said separator is added to said mass of loose, flocculent, dry carbon black and wherein a portion of said mass is withdrawn for further processing.

7. The process of claim 6 characterized in that the quantity of carbon black added to the mass by said portion of said carbon black product as well as by the carbon black containing smoke flowing through said mass and the quantity of carbon black withdrawn from said mass by said portion of said mass are essentially equal.

8. The process of any of claims 5 to 7 characterized in that said carbon black containing smoke is passed into at least one collecting chamber below said filter system and at a location so that the smoke flows through a substantial portion of the mass of loose, flocculent, dry carbon black collected from the filter system in the collecting chamber.

9. The process of claim 8 characterized in that said collecting chamber comprises downwardly conveying walls, wherein conveying means are associated with the lowest section of said collecting chamber or chambers and wherein said smoke is introduced into said collecting chamber in the vicinity of said lowest section.

10. The process of any of claims 1 to 9 characterized in that said smoke is injected into a filter house comprising a plurality of filters and one or more collecting chambers below said filters in downward direction away from said filters and into said collecting chamber wherein said smoke contacts said mass of loose, flocculent, dry carbon black.

11. The process of claim 10 characterized in that said smoke is injected in downward direction from a plurality of downwardly facing outlets arranged inside of said filter house and connected to a pipe.

12. The process of claim 11 characterized in that said outlets are openings in said pipe with the proviso that these openings are facing in downward direction.

13. The process of claim 11 or 12 characterized in that the direction of smoke injection is essentially vertically downward.

14. Apparatus for separating carbon black from carbon black containing smoke comprising

a) a source of carbon black containing smoke,

b) at least one collecting chamber (11) for collecting dry carbon black,

c) a conduit (7) connecting said source and said collecting chamber (11), and

d) separator means (8) above said collecting chamber (11) and adapted to separate carbon black containing smoke into flocculent loose carbon black and an off-gas and to allow the separated carbon black when released from said separator means (8) to fall into said collecting chamber (11)

characterized in that said conduit (7) connects said source and said collecting chamber (11) in such a way as to permit the carbon black containing smoke leaving said conduit (7) to come into contact with a substantial portion of the loose, flocculent, dry carbon black particles (17) in said collecting chamber (11).

15. Apparatus in accordance with claim 14 characterized in that said conduit (7) opens into said collecting chamber (11) and wherein a deflector plate (22) is associated with said conduit (7) causing the smoke introduced into said collecting chamber (11) to be deflected in downward direction.

16. Apparatus in accordance with claim 14 characterized in that said conduit (7) extends into said collecting chamber (11) and is connected to at least one outlet (70) facing downwardly to permit said smoke to flow downwardly into said collecting chamber (11) and contact a substantial portion of collected loose, flocculent, dry carbon black (17) within said chamber (11).

17. Apparatus in accordance with claim 14 characterized in that said separator means (8) comprise filter means (10).

18. Apparatus in accordance with claim 17 wherein said filter means (10) comprises a large number of essentially vertically arranged filter bags (10) having their opening facing downwardly toward said collecting chamber (11).

19. Apparatus in accordance with any one of claims 14 to 18 characterized in that said collecting chamber (11) comprises downwardly converging walls (12) wherein conveying means (13) are associated with the lowest section of said collecting chamber (11) or chambers and wherein said conduit (7) is arranged below said separator means (8) so that said outlet (70) or outlets face into said collecting chamber (11).

20. Apparatus in accordance with any one of claims 14 to 19 characterized in that said outlet (70) is an opening in said conduit (7) in the area which extends into the collecting chamber (11).

21. Apparatus in accordance with claim 20 characterized in that said separator means (8) comprises a large number of filter bags (10) wherein said filter bags (10) are arranged in filter chambers (9), wherein said conduit (7) extending into said collecting chamber (11) comprises pipe sections under each collecting chamber (11) and wherein an opening (70) in the lower portion of said pipe sections is provided below each chamber (9) for introducing carbon black containing smoke for the respective chamber (9).

**Patentansprüche**

1. Verfahren zur Herstellung von Ruß, bei dem man

(a) durch Zersetzung oder unvollständige Verbrennung eines Ruß-Ausgangsmaterials einen erste Rußteilchen enthaltenden Rauch herstellt,

(b) zumindest einen Teil des im Schritt (a) erhaltenen Rußes in Kontakt mit aus Ruß bestehendem teilchenförmigen Material bringt, und

(c) einen die Gasphase des Rauches und Rußpartikel enthaltenden Aerosolstrom abzieht und das Aerosol in einen Abscheider einleitet,

dadurch gekennzeichnet, daß man den Schritt (b) so ausführt, daß man zumindest einen Teil des Rauches in eine Masse aus lockeren, flockigen, trockenen zweiten Rußpartikeln einleitet, die aus dem Abscheider als das teilchenförmige Material erhalten wird.

2. Verfahren nach Anspruch 1, dadurch gekennzeichnet, daß man die Masse in mindestens einer Sammelkammer bereitstellt, in der trockener, lockerer, flockiger Ruß aus dem Abscheider gesammelt wird.

3. Verfahren nach Anspruch 1 oder 2, dadurch gekennzeichnet, daß die Masse aus lockerem, flockigem, trockenem Ruß im wesentlichen unagglomeriert und unpelletiert ist und im wesentlichen durch Schwerkraft in ihrer Lage gehalten wird.

4. Verfahren nach Anspruch 2 oder 3, dadurch gekennzeichnet, daß die Sammelkammer unterhalb des Abscheiders angeordnet ist.

5. Verfahren nach Anspruch 4, dadurch gekennzeichnet, daß der Abscheider ein Filtersystem ist.

6. Verfahren nach einem der Ansprüche 1 bis 5, dadurch gekennzeichnet, daß man zumindest einen Teil des Rußproduktes aus dem Abscheider zu der Masse aus lockerem, flockigem, trockenem Ruß gibt und einen Teil der Masse zur Weiterverarbeitung abzieht.

7. Verfahren nach Anspruch 6, dadurch gekennzeichnet, daß die Menge an Ruß, die sowohl durch den Teil des Rußproduktes, als auch durch den Ruß enthaltenden Rauch, der durch die Masse strömt, zu der Masse gegeben wird, und die Menge an Ruß, die von der Masse durch den Teil der Masse abgezogen wird, im wesentlichen gleich sind.

8. Verfahren nach einem der Ansprüche 5 bis 7, dadurch gekennzeichnet, daß man den Ruß enthaltenden Rauch in mindestens eine Sammelkammer einleitet, die unterhalb des Filtersystems und an einem solchen Ort angebracht ist, daß der Rauch durch einen wesentlichen Teil der Masse aus lockerem, flockigem, trockenem Ruß strömt, die aus dem Filtersystem in der Sammelkammer gesammelt wird.

9. Verfahren nach Anspruch 8, dadurch gekennzeichnet, daß die Sammelkammer abwärts führende Wände aufweist, wobei mit dem untersten Bereich der Sammelkammer oder Sammelkammern eine Fördereinrichtung verbunden ist, und wobei man den Rauch in der Nähe des untersten Bereiches in die Sammelkammer einleitet.

10. Verfahren nach einem der Ansprüche 1 bis 9, dadurch gekennzeichnet, daß man den Rauch in ein Filterhaus, das eine Vielzahl von Filtern und unterhalb der Filter in Abwärtsrichtung von den Filtern entfernt eine oder mehrere Sammelkammern aufweist, und in die Sammelkammer einbläst, wobei der Rauch mit der Masse aus lockerem, flockigem, trockenem Ruß in Kontakt kommt.

11. Verfahren nach Anspruch 10, dadurch gekennzeichnet, daß man den Rauch aus einer Vielzahl von abwärts weisenden Auslässen, die innerhalb des Filterhauses angeordnet und mit einer Rohrleitung verbunden sind, in Abwärtsrichtung einbläst.

12. Verfahren nach Anspruch 11, dadurch gekennzeichnet, daß die Auslässe Öffnungen in der Rohrleitung sind, mit der Maßgabe, daß die Öffnungen in Abwärtsrichtung weisen.

13. Verfahren nach Anspruch 11 oder 12, dadurch gekennzeichnet, daß man den Rauch im wesentlichen in vertikaler Abwärtsrichtung einbläst.

14. Vorrichtung zum Abschneiden von Ruß aus Ruß enthaltenden Rauch mit
(a) einer Quelle für Ruß enthaltenden Rauch,
(b) mindestens einer Sammelkammer (11) zum Sammeln von trockenem Ruß,
(c) einer die Quelle und die Sammelkammer (11) verbindenden Leitung (7), und
(d) einer Abscheideeinrichtung (8) oberhalb der Sammelkammer (11), die so eingerichtet ist, daß sie den Ruß enthaltenden Rauch in flockigen, lockeren Ruß und ein Abgas trennt und es dem abgetrennten Ruß ermöglicht, nach der Ablösung von der Abscheideeinrichtung (8) in die Sammelkammer (11) zu fallen, dadurch gekennzeichnet, daß die Leitung (7) die Quelle und die Sammelkammer (11) in einer Weise verbindet, daß es dem Ruß enthaltenden, die Leitung (7) verlassenden Rauch ermöglicht wird, mit einem wesentlichen Teil der lockeren, flockigen, trockenen Rußpartikel (17) in der Sammelkammer (11) in Kontakt zu kommen.

15. Vorrichtung nach Anspruch 14, dadurch gekennzeichnet, daß sich die Leitung (7) in die Sammelkammer (11) öffnet, wobei eine Ablenkplatte (22) der Leitung (7) zugeordnet ist, die eine Ablenkung des in die Sammelkammer (11) eingeführten Rauches in Abwärtsrichtung verursacht.

16. Vorrichtung nach Anspruch 14, dadurch gekennzeichnet, daß sich die Leitung (7) in die Sammelkammer (11) hinein erstreckt und mit mindestens einem nach unten weisenden Auslaß (70) verbunden ist, um es dem Rauch zu ermöglichen, in Abwärtsrichtung in die Sammelkammer (11) einzuströmen, und einen wesentlichen Teil des gesammelten, lockeren, flockigen, trockenen Rußes (17) in der Sammelkammer (11) zu kontaktieren.

17. Vorrichtung nach Anspruch 14, dadurch gekennzeichnet, daß die Abscheideeinrichtung (8) eine Filtereinrichtung (10) aufweist.

18. Vorrichtung nach Anspruch 17, wobei die Filtereinrichtung (10) eine große Anzahl von im wesentlichen vertikal angeordneten Filtersäcke (10) mit abwärts auf die Sammelkammer (11) weisenden Öffnungen aufweist.

19. Vorrichtung nach einem der Ansprüche 14 bis 18, dadurch gekennzeichnet, daß die Sammelkammer (11) in Abwärtsrichtung zusammenlaufende Wände (12) aufweist, wobei mit dem untersten Bereich der Sammelkammer oder Sammelkammern (11) eine Fördereinrichtung (13) verbunden ist und wobei die Leitung (7) unterhalb der Abscheideeinrichtung (8) angeordnet ist, so daß der Auslaß oder die Auslässe (70) in die Sammelkammer weisen.

20. Vorrichtung nach einem der Ansprüche 14 bis 19, dadurch gekennzeichnet, daß der Auslaß (70) eine Öffnung in einem Bereich der Leitung (7) ist, der sich in die Sammelkammer (11) hinein erstreckt.

21. Vorrichtung nach Anspruch 20, dadurch gekennzeichnet, daß die Abscheideeinrichtung (8) eine große Anzahl von Filtersäcken (10) aufweist, wobei die Filtersäcke (10) in Filterkammern (9) angeordnet sind, wobei die sich in die Sammelkammer (11) hinein erstreckende Leitung (7) unter jeder Sammelkammer (11) Rohrleitungsbereiche aufweist und wobei eine Öffnung (70) im unteren Teil der Rohrleitungsbereiche unterhalb jeder Kammer (9) vorgesehen ist, um Ruß enthaltenden Rauch für die jeweilige Kammer (9) einzuleiten.

**Revendications**

1. Procédé de fabrication de particules de noir de carbone comprenant:
(a) la production d'une fumée contenant des premières particules de noir de carbone par décomposition ou respectivement combustion incomplète d'une charge de départ en noir de carbone,
(b) la mise en contact d'au moins une partie de la fumée obtenue au cours de l'étape (a) avec du matériau particulaire de noir de carbone, et
(c) l'extraction d'un courant d'aérosol comprenant la phase gazeuse de la fumée et des particules de noir de carbone et l'introduction de l'aérosol dans un séparateur, caractérisé en ce que:
l'étape (b) est exécutée en faisant passer au moins une partie de la fumée dans une masse de secondes particules de noir de carbone, détachées, flocculeuses, sèches, obtenues à partir du séparateur au titre du matériau particulaire.

2. Procédé selon la revendication 1, caractérisé en ce que la masse est prévue dans au moins une chambre de réception dans laquelle est recueilli du noir de carbone sec, détaché, flocculeux en provenance du séparateur.

3. Procédé selon la revendication 1 ou la revendication 2, caractérisé en ce que la masse de noir de carbone détaché, flocculeux, sec est essentiellement non agglomérée et non mise en granules et est maintenue en position essentiellement sous l'effet de la gravité.

4. Procédé selon la revendication 2 ou la revendication 3, caractérisé en ce que la chambre de réception est disposée au-dessous du séparateur.

5. Procédé selon la revendication 4, caractérisé en ce que le séparateur est un système filtrant.

6. Procédé selon l'une quelconque des revendications 1 à 5, caractérisé en ce qu'au moins une partie du noir de carbone produit en provenance du séparateur est ajoutée à la masse de noir de carbone détaché, flocculeux, sec, et où une partie de la masse est extraite pour traitement ultérieur.

7. Procédé selon la revendication 6, caractérisé en ce que la quantité de noir de carbone ajoutée à la masse par la partie du noir de carbone produit ainsi que par la fumée contenant du noir de carbone qui traverse la masse et la quantité de noir de carbone extraite de la masse par la partie de cette masse sont essentiellement identiques.

8. Procédé selon l'une quelconque des revendications 5 à 7, caractérisé en ce que la fumée contenant du noir de carbone traverse au moins une chambre de réception au-dessous du système filtrant et à un emplacement tel que la fumée traverse une partie importante de la masse de noir de carbone, détaché, flocculeux, sec, recueille à partir du système filtrant dans la chambre de réception.

9. Procédé selon la revendication 8, caractérisé en ce que la chambre de réception comprend des parois d'acheminement dirigées vers le bas, dans laquelle das moyens d'acheminement sont associés à la section la plus basse de la chambre ou des chambres de réception et où la fumée est introduite dans la chambre de réception dans le voisinage de la section la plus basse.

10. Procédé selon l'une quelconque des revendications 1 à 9, caractérisé en ce que la fumée est injectée dans une enceinte filtrante comprenant une multitude de filtres et une ou plusieurs chambres de réception au-dessous des filtres dans le sens descendant en s'éloignant des filtres et dans la chambre de réception dans laquelle la fumée est en contact avec la masse de noir de carbone détaché, flocculeux, sec.

11. Procédé selon la revendication 10, caractérisé en ce que la fumée est injectée dans le sens descendant à partir d'une multitude d'orifices de sortie dirigés vers le bas qui sont disposés à l'intérieur de l'enceinte filtrante et connectés à une conduite.

12. Procédé selon la revendication 11, caractérisé en ce que les orifices de sortie sont des ouvertures ménagées dans la conduite à condition que ces ouvertures soient dirigées vers le bas.

13. Procédé selon la revendication 11 ou la revendication 12, caractérisé en ce que la direction d'injection de la fumée est essentiellement le sens vertical descendant.

14. Appareil pour séparer du noir de carbone d'une fumée contenant du noir de carbone, comprenant:

a) une source de fumée contenant du noir de carbone,

b) au moins une chambre de réception (11) pour recueillir du noir de carbone sec,

c) une conduite (7) reliant la source à la chambre de réception (11) et

d) un moyen de séparateur (8) au-dessus de la chambre de réception (11) et prévu pour séparer de la fumée contenant du noir de carbone et donner du noir de carbone flocculeux, détaché et un gaz résidual et pour permettre au noir de carbone séparé, lorsqu'il est libéré du moyen de séparateur (8), de tomber dans la chambre de

réception (11) caractérisé en ce que la conduite (7) relie la source et la chambre de réception (11) de façon à permettre à la fumée contenant du noir de carbone qui quitte la conduite (7) de venir en contact avec une partie importante des particules de noir de carbone détaché, flocculeux, sec (17) dans la chambre de réception (11).

15. Appareil selon la revendication 14, caractérisé en ce que la conduite (7) débouche dans la chambre de réception (11), et en ce qu'une plaque de déflecteur (22) est associée à la conduite (7) qui provoque la déviation vers le bas de la fumée introduite dans la chambre de réception (11).

16. Appareil selon la revendication 14, caractérisé en ce que la conduite (7) s'étend dans la chambre de réception (11) et est reliée au moins à un orifice de sortie (70) dirigé vers le bas de manière à permettre à la fumée de s'écouler vers le bas pour entrer dans la chambre de réception (11) et venir en contact avec une partie importante du noir de carbone (17) détaché, flocculeux, sec, recueilli à l'intérieur de la chambre (11).

17. Appareil selon la revendication 14, caractérisé en ce que le moyen de séparateur (8) comprend des moyens de filtre (10).

18. Appareil selon la revendication 17, dans lequel le moyen de filtre (10) comprend un grand nombre de manches filtrantes (10) disposées essentiellement dans la direction verticale, ayant leur ouverture dirigée vers le bas dans la direction de la chambre de réception (11).

19. Appareil selon l'une quelconque des revendications 14 à 18, caractérisé en ce que la chambre de réception (11) comprend des parois convergeant vers le bas (12) dans laquelle des moyens de convoyage (13) sont associés à la section la plus basse de la chambre (11) ou des chambres de réception et où la conduite (7) est disposée au-dessous du moyen de séparateur (8) de sorte que l'orifice de sortie (70) ou les orifices de sortie sont dirigés pour déboucher dans la chambre de réception (11).

20. Appareil selon l'une quelconque des revendications 14 à 19, caractérisé en ce que l'orifice de sortie (70) est une ouverture ménagée dans la conduite (7) dans la zone s'étendant jusque dans la chambre de réception (11).

21. Appareil selon la revendication 20, caractérisé en ce que le moyen de séparateur (8) comprend un grand nombre de manches filtrantes (10) où les manches filtrantes (10) sont disposées dans des chambres filtrantes (9), où la conduite (7) s'étendant jusque dans la chambre de réception (11) comprend des sections de conduite au-dessous de chaque chambre de réception (11) et où une ouverture (70) ménagée dans la partie inférieure des sections de conduite est prévue au-dessous de chaque chambre (9) pour introduire une fumée contenant du noir de carbone pour la chambre respective (9).

0 098 889

FILTER
OFF GAS

*FIG. 1*

OFF-GAS    BACKFLOW

PELLETING
FLUID

*FIG. 2*

FIG.3

FIG. 4

FIG. 5